Europäisches Patentamt

European Patent Office

Office européen des brevets

(11) Numéro de publication : **0 475 864 A1**

# (12) DEMANDE DE BREVET EUROPEEN

(21) Numéro de dépôt : **91420319.5**

(51) Int. Cl.$^5$ : **B29C 37/00, B29C 67/22**

(22) Date de dépôt : **10.09.91**

(30) Priorité : **11.09.90 FR 9011424**

(43) Date de publication de la demande :
**18.03.92 Bulletin 92/12**

(84) Etats contractants désignés :
**AT BE CH DE DK ES FR GB GR IT LI LU NL SE**

(71) Demandeur : **ETABLISSEMENTS MANDUCHER S.A.**
**34, rue Paradis**
**F-01100 Oyonnax (FR)**

(71) Demandeur : **SOCIETE NOUVELLE ALLRIM, S.A.**
**Zone Industrielle des Arbletiers**
**F-25400 Audincourt (FR)**

(72) Inventeur : **Joyant, Maurice**
**9, rue Albert Rono**
**F-25200 Montbeliard (FR)**
Inventeur : **Malarbet, Jacques**
**75 cours de Verdun**
**F-01100 Oyonnax (FR)**

(74) Mandataire : **Karmin, Roger et al**
**Cabinet MONNIER 150, cours Lafayette BP 3058**
**F-69393 Lyon Cédex 03 (FR)**

(54) **Procédé de fabrication in-situ d'un article composite et article obtenu par mise en oeuvre dudit procédé.**

(57) Le procédé consiste à effectuer in-situ dans l'empreinte d'un moule en deux parties les opérations suivantes :
— projeter une couche d'un produit liquide réactif contre la paroi en relief (6) du poinçon (4) et à laisser polymériser la couche projetée pour former une coque (10) ;
— projeter une couche d'un produit liquide réactif contre la paroi de l'empreinte (5) de la matrice (1) du moule ;
— à fermer le moule en appliquant les deux parties l'une contre l'autre tout en conservant en place la coque (10) et le revêtement (9) ;
— à injecter un produit liquide réactif entre la coque (10) et le revêtement (9) afin de réaliser entre eux un bloc intermédiaire.

EP 0 475 864 A1

Fig. 5

La présente invention est relative à la fabrication de panneaux composites décoratifs ou autres et elle se rapporte notamment, bien que non exclusivement, à la fabrication de panneaux de portières d'automobiles, car c'est dans cette application qu'elle semble comporter le plus d'intérêt.

Jusqu'à présent, les panneaux décoratifs composites réalisés en matière plastique comportent deux composants principaux moulés séparément l'un de l'autre et réunis ensemble par la suite de manière que l'on puisse injecter dans l'espace compris entre eux une matière de remplissage. On comprend aisément qu'une telle fabrication est longue, de telle sorte qu'elle grève considérablement le prix de revient final du panneau ainsi constitué.

On a décrit dans le document FR-A-2 538 303 un procédé pour la réalisation d'un produit composite dans lequel on applique une couche de surface sur les parois d'un moule puis après rapprochement des deux parties du moule on introduit dans l'espace séparant les couches un matériau intermédiaire.

Toutefois ce procédé concerne l'application de la même matière rigide et souple après gélification.

Au contraire suivant l'invention l'on applique une couche de deux matières différentes (l'une souple l'autre élastique) respectivement sur les faces des deux parties du moule et l'on injecte une troisième matière entre les deux couches, les trois matières étant chimiquement compatibles afin de former une structure liée chimiquement.

Dans GB-A-1 486 769 on prévoit en plus l'utilisation de deux supports préformés destinés à définir entre eux une cavité et qui coopèrent avec les faces des deux parties du moule.

Ce sont les faces internes des supports qui reçoivent les couches de même matière puis une troisième matière est injectée entre les supports.

Les perfectionnements qui font l'objet de la présente invention visent à remédier à ces inconvénients et à permettre la réalisation d'un panneau du genre en question réalisé in-situ dans un seul moule permettant la mise en oeuvre de ses trois composants.

A cet effet, le procédé suivant l'invention est caractérisé qu'on applique un revêtement en matière souple contre les parois de l'empreinte de la matrice du moule, en ce qu'on réalise sur la paroi en relief du poinçon du moule une coque rigide et qu'après fermeture du moule on injecte un produit liquide réactif dans l'espace formé par le revêtement et la coque pour réaliser un bloc intermédiaire, les matières constitutives du revêtement, de la coque et du bloc étant chimiquement compatibles afin que l'élément composite obtenu forme une structure liée chimiquement.

Dans un mode d'exécution préféré du procédé ci-dessus décrit, le revêtement est réalisé par projection d'une couche de produit liquide réactif qu'on laisse polymériser.

Le dessin annexé, donné à titre d'exemple, permettra de mieux comprendre l'invention, les caractéristiques qu'elle présente et les avantages qu'elle est susceptible de procurer :

Fig. 1 est une coupe transversale de la matrice d'un moule pour la mise en oeuvre du procédé suivant l'invention fixé à l'un des plateaux d'une presse.

Fig. 2 est une coupe du poinçon d'un moule pour la mise en oeuvre du procédé suivant l'invention installé sur le second plateau d'une presse.

Fig. 3 montre la matrice illustrée en fig. 1 contenant un revêtement.

Fig. 4 illustre le poinçon du moule qui soutient une coque rigide.

Fig. 5 représente en coupe le moule fermé prêt pour l'injection d'un liquide réactif entre la coque et le revêtement.

Fig. 6 illustre en coupe un panneau réalisé conformément au procédé suivant l'invention.

Fig. 7 est une coupe d'un pare-chocs de véhicule réalisé par mise en oeuvre par procédé suivant l'invention.

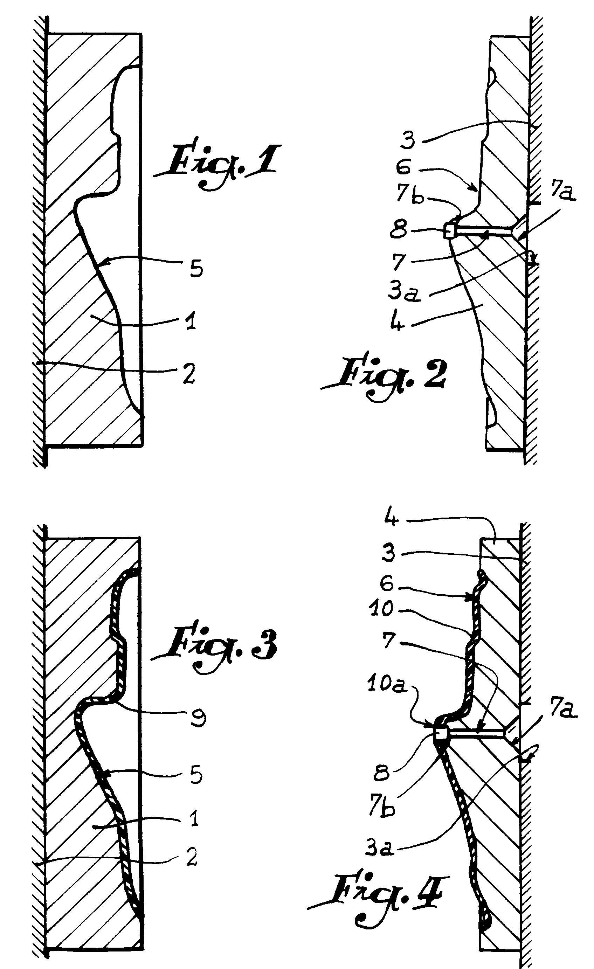

On a illustré en fig. 1 la matrice 1 d'un moule fixé par tout moyen approprié au plateau 2 d'une presse dont le second plateau 3 supporte le poinçon 4 du moule en question (fig. 2). La matrice 1 comporte une empreinte en creux 5, tandis que le poinçon 4 est pourvu d'une paroi en relief 6 dont la forme correspond à celle de l'empreinte 5, comme on l'expliquera mieux plus loin. On observe que le centre du plateau 3 est pourvu d'une ouverture 3a disposée en vis-à-vis du débouché conique 7a d'un canal 7 issu d'un chambrage 7b ménagé dans la paroi en relief 6. Dans le chambrage 7b est engagé un insert 8 dont le rôle sera mieux expliqué plus loin.

La première phase du procédé suivant l'invention consiste à appliquer dans l'empreinte 5 un revêtement 9 (fig. 3) qui peut être une étoffe, de la peau, ou tout autre matière souple appliquée par tout moyen contre les parois de l'empreinte 5. Dans une forme d'exécution préférée, le revêtement 9 est obtenu en projetant une couche de produit liquide réactif contre les parois de l'empreinte 5 et en laissant polymériser la couche en question afin d'obtenir le revêtement 9 qui est laissé dans l'empreinte 5 dont il affecte tous les contours.

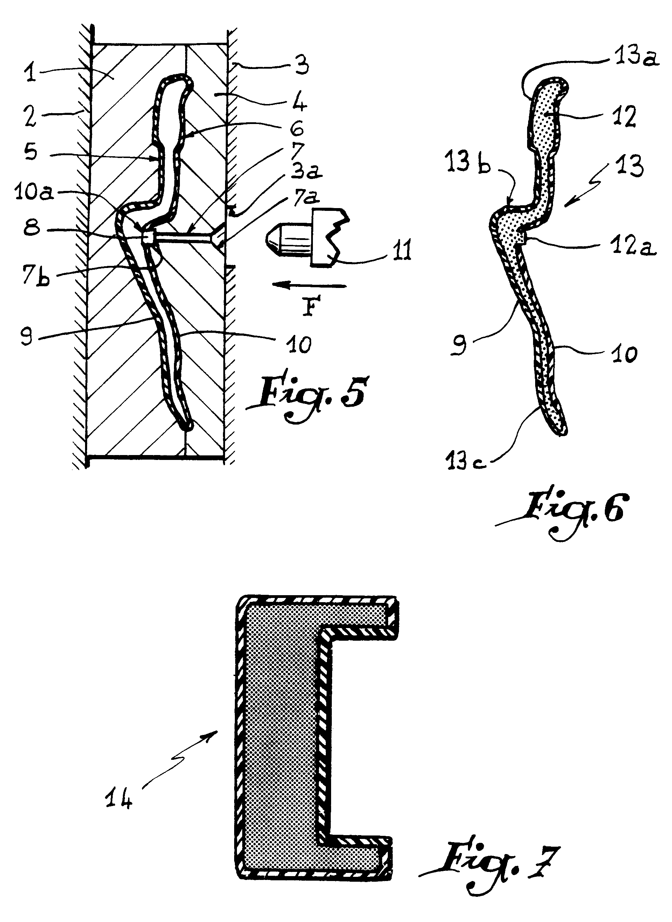

La seconde opération du procédé suivant l'invention consiste à projeter une couche d'un produit liquide réactif contre la paroi en relief du poinçon 4 du moule et à laisser polymériser la couche projetée de manière à former une coque 10 illustrée en fig. 4 et qui est maintenue en place telle que moulée. Du fait de la présence de l'insert 8, la coque 10 comporte un trou 10a (fig. 4) disposé en face du canal 7.

Ensuite, les deux parties du moule, soit la matrice 1 et le poinçon 4, sont appliquées l'une contre l'autre par déplacement des plateaux 2 et 3 l'un vers l'autre. On ne reviendra pas sur les éléments bien connus destinés à centrer le poinçon par rapport à la matrice, ni sur les moyens de fixation des deux parties du moule sur les plateaux. Bien entendu, avant la fermeture du moule, l'insert 8 a été extrait du chambrage 10a pour que le canal 7 aboutisse librement dans l'espace libre constitué entre le revêtement 9 et la coque 10 dont les formes se correspondent en vue de déterminer le profil de cet espace en fonction des desiderata.

Une buse 11 est alors déplacée dans le sens de la flèche F pour être appliquée de maniére étanche contre le débouché conique 7a du canal 7 situé dans l'ouverture 3a.

La buse 11 est reliée à une machine permettant l'injection d'un produit liquide réactif entre la coque 10 et le revêtement 9, de manière qu'après polymérisation de ce produit liquide, on obtienne un bloc intermédiaire 12 enserré entre la coque et le revêtement. Le bloc 12 comporte bien entendu un téton 12a moulé dans le chambrage 7b du canal 7. Les deux parties du moule sont ensuite ouvertes et l'élément composite 13 illustré en fig. 6 est éjecté par tout moyen approprié.

On conçoit aisément que tout panneau peut être exécuté conformément au procédé ci-dessus décrit, mais l'élément 13 illustré en fig. 6 constitue avantageusement un panneau intérieur de portière automobile qui comprend un bandeau supérieur 13a, un accoudoir 13b et une jupe inférieure 13c.

Lorsque les trois éléments du panneau 13, c'est-à-dire le revêtement 9, la coque 10 et le bloc intermédiaire 12, sont réalisés à partir de produits liquides réactifs, ceux-ci sont préférablement choisis parmis les produits suivants :

Polyuréthannes, polyurées, polyesthers, époxydes, phénoliques, polyamides etc... Toutefois, dans l'application particulière du panneau de portière de voiture, on choisit pour la réalisation du revêtement 9 un polyurée pour le bloc 12 du polyuréthanne tandis que la coque 10 est réalisée aussi en polyurée. De cette manière, le bloc intermédiaire 12 est réalisé en une mousse élastique, tandis que le revêtement extérieur constitue une enveloppe souple dont la finition dépend de la gravure de l'empreinte 5 de la matrice 1. Quant à la coque 10, elle est prévue rigide de manière à comporter une grande résistance assurant sa fonction de support rigide associé à la tôle de la portière et soutenant parfaitement bien le bloc 12 et le revêtement 9. Bien entendu, les produits utilisés sont prévus chimiquement compatibles afin que l'élément composite 13 forme une structure liée chimiquement.

Le bloc intermédiaire 12, réalisé en une mousse souple, assure en dehors de la liaison de l'ensemble le confort phonique et thermique, la souplesse du toucher ainsi que la sécurité par exemple en cas de choc latéral. Bien entendu, le revêtement 9 pourrait être discontinu de manière que pour des raisons techniques ou esthétiques des parties du bloc intermédiaire 12 apparaissent sur la partie visible de l'élément 13.

La description ci-dessus concerne plus particulièrement la réalisation d'un panneau de portière, mais bien entendu on pourrait réaliser de la même manière par exemple un pare-chocs 14 (fig. 7), des portes de capot ou de coffre etc..., le revêtement étant alors dans ces conditions choisi d'une qualité appropriée.

Grâce au procédé suivant l'invention, on peut obtenir de manière simple et économique des panneaux répondant particulièrement bien aux diverses exigences de la pratique, du fait de leur fabrication in-situ à l'intérieur d'un seul et même moule.

En particulier, les liaisons entre le revêtement et la coque n'ont pas été décrites, car elles tombent dans le domaine de l'homme du métier. Le revêtement et la coque peuvent ainsi être limités ou s'étendre sur les surfaces de la matrice et du poinçon formant leur plan de joint. On pourrait aussi supprimer l'insert 8 destiné à former le trou d'injection 10a et procéder à l'injection de la mousse dans le plan de joint du revêtement et de la coque.

## Revendications

1. Procédé de moulage in-situ d'un élément composite consistant à déposer un revêtement sur les parois des empreintes ménagées respectivement dans les deux parties d'un moule, à fermer le moule et à injecter dans l'espace compris entre les deux revêtements une matière de remplissage, caractérisé en ce qu'on applique un revêtement (9) en matière souple contre les parois de l'empreinte (5) de la matrice (1) du moule, en ce qu'on réalise sur la paroi en relief du poinçon (4) du moule une coque rigide (10) et qu'après fermeture du moule on injecte un produit liquide réactif dans l'espace formé par le revêtement (19) et la coque (10) pour réaliser un bloc intermédiaire (12), les matières constitutives du revêtement (9), de la coque (10) et du bloc (12) étant chimiquement compatibles afin que l'élément composite obtenu (13) forme une structure liée chimiquement.

2. Procédé suivant la revendication 1, caractérisé en ce que le revêtement (9) est réalisé par projection d'une couche de liquide réactif qu'on laisse polymériser.

3. Procédé suivant la revendication 2, caractérisé en ce que lors de la mise en oeuvre de la coque (10), on réalise dans celle-ci un trou (10a) disposé en face d'un canal (7) reliant la face de la partie du moule sur laquelle la coque (10) est réalisée et l'extérieur afin qu'après fermeture du moule on puisse injecter le troisième produit entre la coque (10) et le revêtement (9).

4. Procédé suivant l'une quelconque des revendications 1 et 2, caractérisé en ce que le revêtement (9) est réalisé en une matière souple assurant à l'élément composite fini (13) l'aspect et la finition désirés.

5. Procédé suivant la revendication 2, caractérisé en ce que la coque (10) est réalisée en une matière à haute résistance assurant la fonction d'armature de l'élément fini (13).

6. Procédé suivant la revendication 2, caractérisé en ce que le bloc intermédiaire (12) est constitué d'une mousse assurant la liaison avec la coque (10) et le revêtement (9) et soutenant élastiquement ce dernier.

7. Procédé suivant la revendication 2, caractérisé en ce que le revêtement (9) et le bloc intermédiaire (12) sont réalisés en polyuréthanne tandis que la coque (10) est un polyurée.

8. Elément composite (13), notamment panneau, caractérisé en ce qu'il est fabriqué par mise en oeuvre du procédé suivant l'une quelconque des revendications 1 à 7.

Fig.1

Fig. 2

Fig. 3

Fig. 4

*Fig. 5*

*Fig. 6*

*Fig. 7*

Office européen
des brevets

**RAPPORT DE RECHERCHE EUROPEENNE**

Numero de la demande

EP    91 42 0319

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,X | GB-A-1 486 769 (ROWLEY(R+D)LTD.)<br>* page 1, ligne 26 - page 1, ligne 53 *<br>--- | 1-8 | B29C37/00<br>B29C67/22 |
| D,X | FR-A-2 538 303 (GIGON)<br>* page 2, ligne 25 - page 3, ligne 5 *<br>* page 6, ligne 6 - page 6, ligne 8 *<br>--- | 1-8 | |
| A | US-A-4 873 032 (KOHLHASE)<br>--- | 1,8 | |
| A | US-A-4 546 900 (LACKEY)<br>--- | 1,7,8 | |
| A | US-A-4 546 899 (WILLIAMS)<br>--- | 1,8 | |
| A | US-A-4 289 717 (BORTZ)<br>--- | 1,8 | |
| A | PATENT ABSTRACTS OF JAPAN<br>vol. 7, no. 215 (M-244)(1360) 22 Juillet 1983<br>& JP-A-58 110 225 ( KASAI ) 30 Juin 1983<br>* abrégé *<br>--- | 1,8 | |
| A | US-A-3 976 731 (KAPRAL)<br><br>----- | 1 | **DOMAINES TECHNIQUES RECHERCHES (Int. Cl.5 )**<br><br>B29C |

Le présent rapport a été établi pour toutes les revendications

| Lieu de la recherche | Date d'achèvement de la recherche | Examinateur |
|---|---|---|
| LA HAYE | 18 DECEMBRE 1991 | ROBERTS P.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P0402)